(19)

Europäisches
Patentamt
European
Patent Office
Office européen
des brevets

(11) **EP 2 733 573 A1**

(12) **EUROPEAN PATENT APPLICATION**

(43) Date of publication:
**21.05.2014 Bulletin 2014/21**

(51) Int Cl.:
***G06F 3/01*** (2006.01)          ***G06F 3/03*** (2006.01)
***G06F 3/041*** (2006.01)

(21) Application number: **12007767.2**

(22) Date of filing: **16.11.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Sony Mobile Communications AB
221 88 Lund (SE)**

(72) Inventor: **Klinghult, Gunnar
22359 Lund (SE)**

(74) Representative: **Banzer, Hans-Jörg
Kraus & Weisert
Patent- und Rechtsanwälte
Thomas-Wimmer-Ring 15
80539 München (DE)**

(54) **Detecting a position or movement of an object**

(57)     The present invention relates to a method for detecting a position or movement of an object (20). According to the method, at a plurality of different locations (13-15) infrared light emitted from the object (20) is received. The infrared light is based on a thermal emission of the object (20). Furthermore, a plurality of infrared light intensity information (A-C) is determined. For each of the plurality of different locations (13-15) a corresponding infrared light intensity information (A-C) is determined based on the infrared light received at the corresponding location (13-15). The position or movement (21, 22) of the object (20) is determined depending on the plurality of infrared light intensity information (A-C).

**Fig. 1**

## Description

FIELD OF THE INVENTION

The present invention relates to a method for detecting a position or movement of an object, especially to a detection of gestures performed by a user of an electronic device for controlling functions of the electronic device. The present invention relates furthermore to a device, for example a mobile device like a mobile phone or a smart phone, implementing the method for detecting a position or movement of an object. The movement or gesture may comprise for example a movement of a hand of the user in an environment of the device.

BACKGROUND OF THE INVENTION

Electronic devices, for example communication devices, mobile phones, personal digital assistants, mobile computers and so on, are typically equipped with one or more user input devices. Common user input devices include for example a computer mouse, a trackball, a keypad, a touch pad, and so on. Furthermore, especially in connection with mobile devices, contactless user interface devices have been suggested that are capable of detecting or sensing user movements, for example gestures, for controlling functions of the electronic devices. The detected user movement or gesture may be used to control a wide variety of parameters associated with the electronic device. Several optical solutions like cameras or discrete sensors for detecting user movements or gestures may be used. However, the monitored target, for example a hand of the user, has to be illuminated somehow to detect the movement or gesture. In a dark environment the electronic device has to provide an appropriate illumination for illuminating the target which may consume a considerable amount of electrical power. This may be a critical issue, especially in mobile devices like mobile phones or personal digital assistants. Therefore, there is a need for detecting a position or movement of an object or for detecting a gesture with a low electrical power consumption.

SUMMARY OF THE INVENTION

According to the present invention, this object is achieved by a method for detecting a position or movement of an object as defined in claim 1 and a device as defined in claim 13. The dependent claims define preferred and advantageous embodiments of the invention.
According to the present invention, a method for detecting a position or movement of an object or for detecting a gesture is provided. According to the method, infrared light is received at a plurality of different locations. The infrared light is emitted from the object based on a thermal emission of the object. In other words, the infrared light which is received at the plurality of different locations is not a reflected infrared light, but a so called thermal infrared light which is based on the natural infrared radiation of an object having a certain temperature. Thermal infrared light comprises typically the so called mid wavelength infrared light and long wavelength infrared light. The mid wavelength infrared light may comprise for example light within a wavelength range of 3 to 8 $\mu$m and the long wavelength infrared light may comprise infrared light having a wavelength in the range of 8 to 15 $\mu$m. Therefore, the infrared light received at the plurality of different locations may have a wavelength in the range of 3 to 15 $\mu$m. Based on the infrared light received at the plurality of different locations, a plurality of corresponding infrared light intensity information is determined. At each location of the different locations infrared light is received and based on this infrared light a corresponding infrared light intensity information is determined which is also associated to the location. Depending on the plurality of infrared light intensity information a movement of the object is determined. Additionally or alternatively, depending on the plurality of infrared light intensity information a position of the object is determined
By using a plurality of infrared sensors, for example thermophile sensors, located at a plurality of different locations, for example arranged in an array of infrared sensors, the position or the movement of for example a hand of a user can be determined in x, y and z directions. The amplitude of signals from the sensors, i. e. the infrared light intensity information from the respective sensors, is related to the distance to the object emitting the infrared light. For example, the amplitude of a signal from the sensor may be proportional to the distance to the object. A relative distance and a type of movement of the object may be determined by this information. Furthermore, movements up and down, transversal in any direction, or a rotation clockwise and counterclockwise may be detected. This can be used for controlling different functions in the device, for example for controlling or varying a sound level of the electronic device, for starting or stopping a media playback of the electronic device or for scrolling in a menu displayed on a display of the electronic device. By receiving infrared light in the mid wavelength and long wavelength infrared light range, it is not required to illuminate the object with an infrared light source or a thermal source. Thus, the position or movement detection can be performed totally passive and the detection consumes therefore only very little electrical power. For example, it may be possible to design an interrupted driven system using the above-described method for detecting the movement of an object which consumes less than 10 pA. This low power consumption allows to use or operate the movement detection continuously if desired. Furthermore, the position or movement detection may also work when the user is wearing gloves or when the detection is performed in a completely dark environment.
The thermal emission of the object may be based on a temperature of the object and an emissivity of the object. Furthermore, the infrared light received may have a wavelength in the range from 3 to 15 $\mu$m, preferably in the range of 5 to 12 $\mu$m. A filter restricting the light received at the plurality of different locations to the above-defined ranges, especially to the range from 5 to 12 $\mu$m, may avoid that the position or movement detection is disturbed by sunlight. Furthermore, a cooling of the sensors receiving the infrared light in the above-described wavelength arrangement can be avoided. Finally, infrared sensors adapted to receive infrared light in the above-described wavelength ranges are available at a low price and may work with a low power consumption.

According to an embodiment, the infrared light is received at three different locations which are arranged in a triangle. Based on infrared light intensity information from sensors arranged in a triangle, a lot of different movement patterns may be detected and distinguished, for example lateral movements in parallel to the plane defined by the three locations as well as movements perpendicular to the plane defined by the three locations.

According to another embodiment, the infrared light is received at a first location and a second location. An angle characterizing the position of the object with respect to the first and second location can be easily determined depending on the light intensity information of the first and second locations. The angle is defined between two straight lines. One of the straight lines is running through the first and second locations and the other straight line is running through a center between the first and second locations and the location of the object. The angle between the two straight lines may be calculated by a function of the light intensity information A of the first location and the light intensity information B of the second location. The angle $\alpha$ may be determined by a function f according to:

$$\alpha = f\left(\frac{A-B}{A+B}\right).$$

Especially, the angle $\alpha$ may have a proportional relation according to:

$$\alpha \sim \frac{A-B}{A+B}.$$

Therefore, an angle information where the object is located with respect to the first and second locations can be easily determined based on the infrared light intensity information. A position of the object may be determined by triangulation using for example two angle information determined as described above.

According to an embodiment, the above-described method is performed automatically by an electronic device. The electronic device may comprise for example a mobile phone, a person digital assistant, a mobile music player, a tablet computer, a laptop computer, a notebook computer, or a navigation system. Due to the low power consumption required for performing the above-described method, a position or movement detection or a gesture detection can be performed automatically and efficiently by the electronic device. The object may comprise for example a body part of a user of the electronic device, for example a hand of the user.

According to the present invention, a device is provided comprising a plurality of sensors and a processing unit. The sensors are arranged at a plurality of different locations. Each sensor is adapted to receive infrared light emitted from an object, for example a body part like a hand of a user of the device, and to provide a corresponding infrared light intensity information based on the infrared light received at the corresponding location. The infrared light is based on a thermal emission of the object. The processing unit is coupled to the plurality of sensors and adapted to determine a position or movement of the object, for example a gesture, depending on the plurality of infrared light intensity information received from the plurality of sensors. The device may be adapted to perform the above-described method steps. The device may comprise for example a mobile phone, a personal digital assistant, a mobile music player, a tablet computer, a laptop computer, a notebook computer, or a navigation system.

Although specific features described in the above summary and the following detailed description are described in connection with specific embodiments, it is to be understood that the features of the embodiments may be combined with each other unless specifically noted otherwise.

BRIEF DESCRIPTION OF THE DRAWINGS

The invention will now be described in more detail with reference to the accompanying drawings.

Fig. 1 shows schematically a device according to an embodiment of the present invention.

Fig. 2 shows an exemplary cross-sectional view of sensor detection fields according to an embodiment of the present invention.

Fig. 3 shows a graphical representation of infrared light intensity information versus time for a vertical movement detection according to an embodiment of the present invention.

Fig. 4 shows a top view of sensor detection fields according to an embodiment of the present invention.

Fig. 5 shows a graphical representation of infrared light intensity information versus time for a horizontal movement detection according to an embodiment of the present invention.

Fig. 6 shows an arrangement of an object with respect to two infrared sensors.

DETAILED DESCRIPTION OF PREFERRED EMBODIMENTS

In the following, exemplary embodiments of the invention will be described in more detail. It has to be understood that the features of the various exemplary embodiments described herein may be combined with each other unless specifically noted otherwise. Same reference signs in the various drawings and the following description refer to similar or identical components.

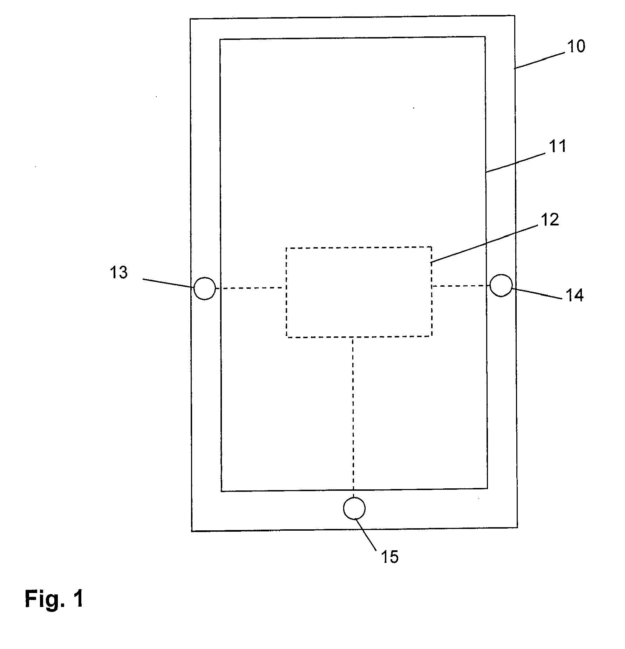

Fig. 1 shows a mobile device 10, for example a mobile phone or a so called smart phone. The mobile device 10 comprises a touch screen 11 and a processing unit 12. The mobile device 10 comprises furthermore three infrared sensors 13-15 which are arranged in a triangle along edges of the touch screen 11. The infrared sensors 13-15 are coupled to the processing unit 12. The infrared sensors 13-15 are adapted to receive infrared light emitted from an object arranged in an environment outside the mobile device 10, especially in an environment arranged above the touch screen 11. The infrared sensors 13-15 are adapted to receive infrared light emitted from the object and to provide a corresponding infrared light intensity information based on the infrared light received at their corresponding locations. The infrared light received by the sensors 13-15 is based on a thermal emission of the object, for example in a wavelength range of 3-15 μm. Thus, an illumination of the object with infrared light or visible light is not needed.

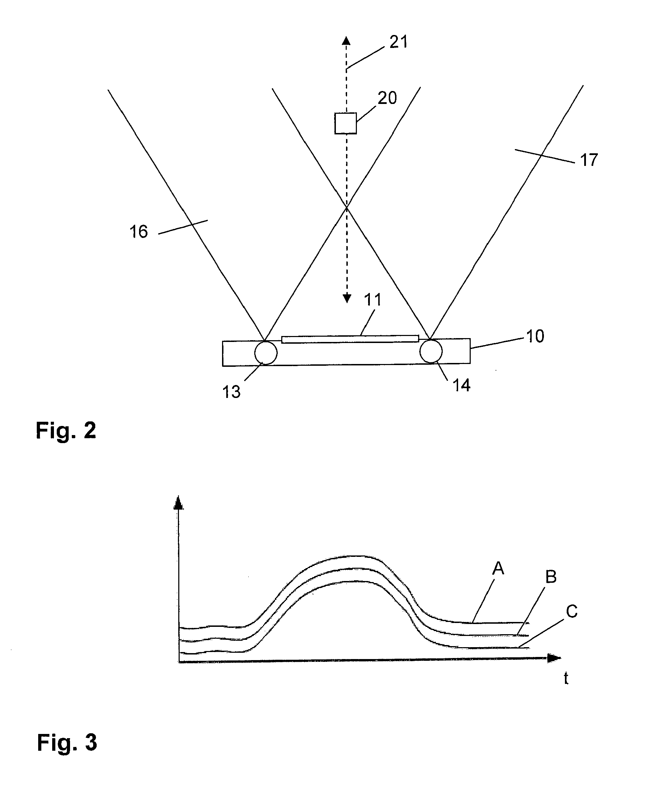

Fig. 2 shows a cross-sectional view of the mobile device 10. In the cross-sectional view only the infrared sensors 13 and 14 are shown, whereas the infrared sensor 15 is not shown. The infrared sensor 13 has a sensor detection field 16 and the infrared sensor 14 has a sensor detection field 17. Furthermore, Fig. 2 shows an object 20, which may be for example a hand of a user using the mobile device 10. The object 20 may be moved for example along the dashed line 21 in a direction perpendicular to the surface of the touch screen 11. Due to the movement of the object 20, the intensity of the infrared light received at the sensors 13-15 is varied and thus the sensors 13-15 output are varying infrared light intensity information to the processing unit 12. Fig. 3 shows the varying infrared light intensity information A-C output by the sensors 13-15 versus time for the vertical movement of the object 20. Infrared light intensity information A is output by sensor 13, infrared light intensity information B is output by sensor 14, and infrared light intensity information C is output by sensor 15. Based on the change of infrared light intensity information A-C received from the sensors 13-15, the processing unit 12 may determine the movement of the object 20 along the direction 21. As the three infrared light intensity information A-C from the three sensors 13-15 change versus time essentially proportionally, the processing unit 12 can determine a vertical movement along the direction 21. Based on the detected movement of the object 20, the processing unit 12 may control a function of the mobile device 10, for example varying a sound level of a phone call or media played back by the mobile device 10, starting or stopping of a media play back of the mobile device 10 or scrolling in a menu of the mobile device 10.

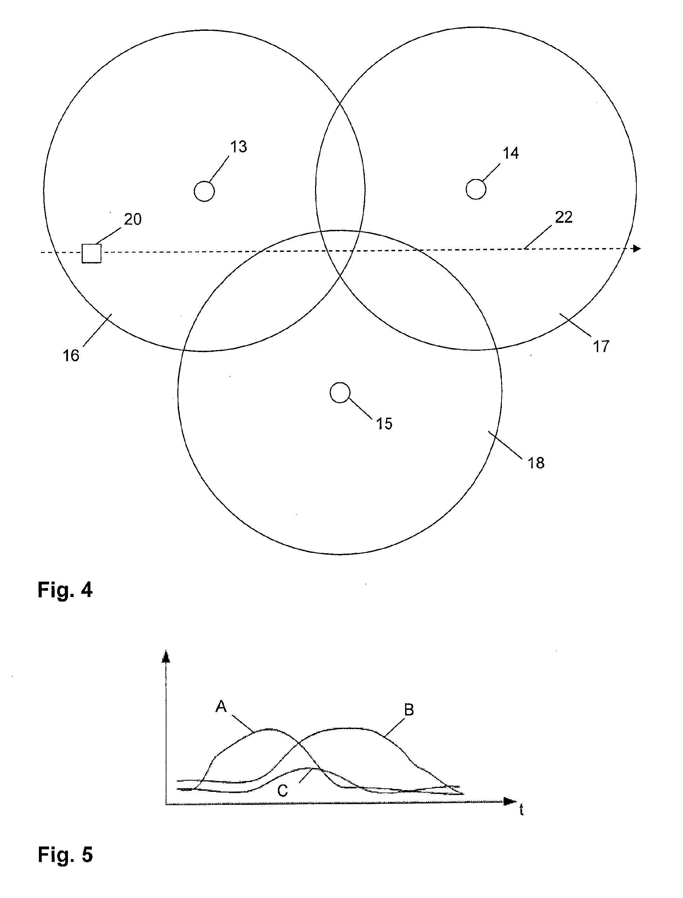

Fig. 4 shows a top view of the infrared light sensors 13-15 and corresponding detection fields 16-18 of the infrared sensors 13-15. The object 20 is moved along the direction 22 which means that the object 20 is moved laterally and parallel to the touch screen 11 of the mobile device 10. Fig. 5 shows the infrared light intensity information A-C versus time of the infrared sensors 13-15 while the object 20 is moving along the direction 22. First, the object 20 approaches sensor 13 and therefore a maximum of infrared light intensity information A of sensor 13 is reached. On the further way of the object 20 the distance between the object 20 and the sensor 13 becomes larger and the object passes subsequently sensors 15 and then 14. Correspondingly, first, a maximum of the infrared light intensity information C of sensor 15 is reached and then a maximum of the infrared light intensity information B of sensor 14 is reached. Thus, the processing unit 12 can determine from the infrared light intensity profiles A-C of the sensors 13-15 the lateral movement of the object 20. Based on this lateral movement a function of the mobile device can be operated as described above.

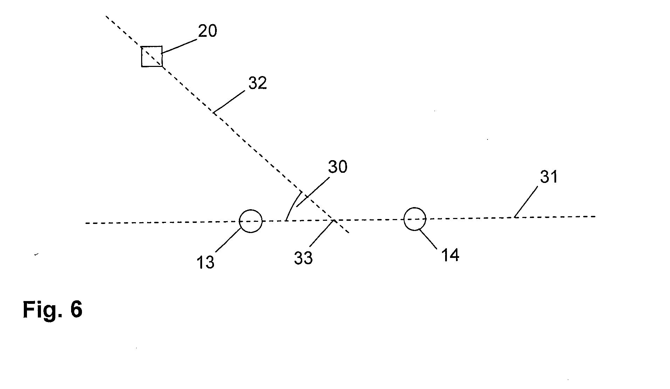

Fig. 6 shows how to determine an angle 30 between two sensors 13, 14 and the object 20. The angle 30 is defined as an angle between a first straight line 31 and a second straight line 32. The first straight line 31 is a straight line through the locations of the first infrared sensor 13 and the second infrared sensor 14. The second straight line 32 is defined as a straight line through a center 33 between the first sensor 13 and the second sensor 14 and the object 20. The first sensor 13 receives infrared light emitted from the object 20 and provides a corresponding first infrared light intensity information A. The second infrared sensor 14 receives infrared light emitted from the object 20 and provides a second infrared light intensity information B. The angle α 30 is determined by a function f according to:

$$\alpha = f\left(\frac{A-B}{A+B}\right).$$

Especially, the angle α may have a proportional relation according to:

$$\alpha \sim \frac{A-B}{A+B}.$$

A position of the object 20 may be determined for exampled based on two or more angle information provided by at least three sensors.

While exemplary embodiments have been described above, various modifications may be implemented in other embodiments. For example, instead of using three infrared sensors 13-15 mounted in a triangle, more sensors may be used, for example arranged in an array or around the touch screen 11. Using more sensors may give a higher precision and a more robust system. However, more infrared sensors may require higher costs and more components. Furthermore, the signals from the infrared sensors 13-15 provided to the processing unit 12, i.e. the infrared light intensity information A-C, may be amplified and low-pass filtered before they are provided to the processing unit 12. The processing unit 12 may comprise analog-to-digital-converters to convert analog signals from the infrared sensors into digital signals and may determine the position or movement of the object based on the digitized infrared light intensity information.

**Claims**

1. A method for detecting a position or movement of an object, the method comprising:

   - receiving at a plurality of different locations (13-15) infrared light emitted from the object (20), wherein the infrared light is based on a thermal emission of the object (20),
   - determining a plurality of infrared light intensity information (A-C), wherein for each of the plurality of different locations (13-15) a corresponding infrared light intensity information (A-C) is determined based on the infrared light received at the corresponding location (13-15), and
   - determining the position or movement (21, 22) of the object (20) depending on the plurality of infrared light intensity information (A-C).

2. The method according to claim 1, wherein the thermal emission of the object (20) is based on a temperature and an emissivity of the object (20).

3. The method according to claim 1 or 2, wherein receiving the infrared light does not require illuminating the object (20) with an infrared light or a thermal source.

4. The method according to any one of the preceding claims, wherein receiving the infrared light comprises receiving light having a wavelength in the range from 3 to 15 $\mu$m, preferably in the range from 5 to 12 $\mu$m.

5. The method according to any one of the preceding claims, wherein receiving the infrared light comprises receiving the infrared light at three locations (13-15), wherein the three locations (13-15) are arranged in a triangle.

6. The method according to any one of the preceding claims, wherein receiving the infrared light comprises receiving the infrared light at a first location (13) and a second location (14), wherein an angle (30) between a straight line (31) through the first and second locations (13, 14) and a straight line (32) through a centre (33) between the first and second locations (13, 14) and the position of the object (20) is determined depending on the light intensity information (A, B) of the first and second locations (13, 14).

7. The method according to claim 6, wherein the angle $\alpha$ (30) is determined by a function f according to:

$$\alpha = f\left(\frac{A-B}{A+B}\right),$$

wherein A is the intensity information of the first location (13) and B is the intensity information of the second location (14).

8. The method according to any one of the preceding claims, further comprising controlling a function of an electronic device (10) depending on the determined position or movement (21, 22) of the object (20).

9. The method according to claim 8, wherein controlling the function comprises:

   - varying a sound level of the electronic device (10),
   - starting or stopping of a media playback of the electronic device (10), and/or
   - scrolling in a menu of the electronic device (10).

10. The method according to any one of the preceding claims, wherein the method is automatically performed by an electronic device (10).

11. The method according to claim 10, wherein the electronic device (10) is a device selected from a group consisting of a mobile phone, a personal digital assistant, a mobile music player, a tablet computer, a laptop computer, a notebook computer, and a navigation system.

**12.** The method according to claim 10 or 11, wherein the object (20) is a body part of a user of the electronic device (10).

**13.** A device comprising:

- a plurality of sensors (13-15) arranged at a plurality of different locations, wherein each sensor (13-15) is adapted to receive infrared light emitted from an object (20) and to provide a corresponding infrared light intensity information (A-C) based on the infrared light received at the corresponding location, wherein the infrared light is based on a thermal emission of the object (20), and
- a processing unit (12) coupled to the plurality of sensors (13-15) and adapted to determine a position or movement (21, 22) of the object (20) depending on the plurality of infrared light intensity information (A-C) received from the plurality of sensors (13-15).

**14.** The device according to claim 13, wherein the device (10) is adapted to perform the method according to any one of the claims 1-12.

**15.** The device according to claim 13 or 14, wherein the device (10) comprises at least one device of a group consisting of a mobile phone, a personal digital assistant, a mobile music player, a tablet computer, a laptop computer, a notebook computer, and a navigation system.

**Fig. 1**

**Fig. 2**

**Fig. 3**

**Fig. 4**

**Fig. 5**

20

32

30

31

13    33    14

**Fig. 6**

Europäisches
Patentamt

European
Patent Office

Office européen
des brevets

## EUROPEAN SEARCH REPORT

Application Number

EP 12 00 7767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/050643 A1 (ZHAO RUI [CN] ET AL) 3 March 2011 (2011-03-03) * paragraph [0010] - paragraph [0013] * * paragraph [0021] - paragraph [0037] * * paragraph [0039] * * figures 1-3 * * table 1 * | 1-15 | INV. G06F3/01 G06F3/03 G06F3/041 |
| X | US 2011/115821 A1 (HUANG HAO-JAN [TW] ET AL) 19 May 2011 (2011-05-19) * paragraph [0018] - paragraph [0025] * * figures 2-7 * | 1-15 | |
| X | US 2010/127969 A1 (CHANGCHIEN CHING-HENG [TW]) 27 May 2010 (2010-05-27) * paragraph [0021] - paragraph [0045] * * figures 1-4 * | 1-15 | |
| A | US 2008/134102 A1 (MOVOLD CATHRINE [SE] ET AL) 5 June 2008 (2008-06-05) * paragraph [0060] - paragraph [0083] * * figures 1,2,4,9,10-13 * | 6,7 | TECHNICAL FIELDS SEARCHED (IPC) G06F G08B |

The present search report has been drawn up for all claims

| Place of search | Date of completion of the search | Examiner |
|---|---|---|
| Munich | 8 April 2013 | Hauber, Jörg |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 00 7767

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2013

| Patent document cited in search report | | Publication date | Patent family member(s) | | Publication date |
|---|---|---|---|---|---|
| US 2011050643 | A1 | 03-03-2011 | CN 102004544 A<br>US 2011050643 A1 | | 06-04-2011<br>03-03-2011 |
| US 2011115821 | A1 | 19-05-2011 | TW 201117063 A<br>US 2011115821 A1 | | 16-05-2011<br>19-05-2011 |
| US 2010127969 | A1 | 27-05-2010 | TW 201020856 A<br>US 2010127969 A1 | | 01-06-2010<br>27-05-2010 |
| US 2008134102 | A1 | 05-06-2008 | EP 2100208 A2<br>US 2008134102 A1<br>WO 2008068557 A2 | | 16-09-2009<br>05-06-2008<br>12-06-2008 |

EPO FORM P0459

For more details about this annex : see Official Journal of the European Patent Office, No. 12/82